# EUROPÄISCHE PATENTSCHRIFT

(11) **EP 0 918 947 B1**
(45) Veröffentlichungstag und Bekanntmachung des Hinweises auf die Patenterteilung: **22.01.2003**
(21) Anmeldenummer: 97938911.1
(22) Anmeldetag: 16.08.1997
(51) Int. Cl.: F16C 13/02, F16C 13/00

(54) **VERFAHREN UND VORRICHTUNG ZUM VERÄNDERN DER DURCHBIEGUNG EINER WELLE, ACHSE ODER EINES ANDEREN TRÄGERS**
METHOD AND DEVICE FOR CORRECTING THE BENDING OF A SHAFT, AN AXLE OR ANOTHER CARRIER
PROCEDE ET DISPOSITIF POUR MODIFIER LA FLEXION D'UN ARBRE, D'UN AXE OU D'UN AUTRE ORGANE PORTEUR

(30) Priorität: 06.09.1996 DE 19636184
(43) Veröffentlichungstag der Anmeldung: 02.06.1999
(73) Patentinhaber: Pöppinghaus, Winfried, 37242 Bad Sooden-Allendorf (DE)
(72) Erfinder: Pöppinghaus, Winfried, 37242 Bad Sooden-Allendorf (DE)
(74) Vertreter: Patentanwälte Rehberg + Hüppe
(86) Internationale Anmeldenummer: EP9704472
(87) Internationale Veröffentlichungsnummer: WO98010199

(56) Entgegenhaltungen:
- EP-A- 0 686 502
- DE-A- 1 610 886
- DE-A- 4 439 908
- FR-A- 1 450 291

## Beschreibung

Die Erfindung bezieht sich auf ein Verfahren zum Verändern der Durchbiegung eines Trägers, beispielsweise einer Welle oder Achse, der im Bereich seiner beiden Enden von je einem aus zwei Stützen gebildeten Stützenpaar abgestützt wird, wobei der Träger infolge seines Gewichtes und ggfs. durch das Aufbringen zusätzlicher Lasten und/oder durch das Aufbringen von Belastungskräften in die Stützen eine Durchbiegung erfährt und in die Stützen eine der Durchbiegung entgegenwirkende Gegenbiegekraft eingeleitet wird. Es wird auch eine zur Durchführung des Verfahrens geeignete Vorrichtung aufgezeigt. Die Erfindung läßt sich überall dort anwenden, wo ein Träger einer Durchbiegung unterliegt und diese Durchbiegung zumindest störend ist und das Arbeitsergebnis nachteilig beeinflussen kann. Es wird die Veränderung der Durchbiegung eines Trägers aufgezeigt, also eine Art, wie im Sinne eines Steuervorgangs der Durchbiegung entgegengewirkt wird. Die Träger können ganz verschiedene Ausbildung aufweisen. Es kann sich um stillstehende Träger, also Balken, handeln. Ein bevorzugtes Anwendungsgebiet stellen jedoch die rotierend angetriebenen oder rotierenden Träger dar, insbesondere Wellen, mit denen Drehmomente übertragen werden, und Achsen, die zur Aufnahme von Querkräften dienen. Bevorzugte Anwendungsgebiete der Erfindung sind Warm- und Kaltwalzwerke, Blechrundbiegemaschinen, Papiermaschinen, Rollenschneider, Kalander und ähnliche Einrichtungen. Auch beim Auftragen von pastösen Massen auf flächenförmiges Trägermaterial, welches mit Hilfe von Walzen durchgeführt wird, läßt sich die Erfindung anwenden.

Ein Verfahren und eine Vorrichtung der eingangs beschriebenen Art sind aus der DE 44 39 908 A1 bekannt. Als Träger findet eine auf Lagerstützen gelagerte Wickelwelle Anwendung, auf dem das bahnförmige Material zu einem Wickel aufgewickelt wird. Bei zunehmendem Wickeldurchmesser bewirkt die zusätzliche Last des Wickels und das Gewicht der Welle eine Durchbiegung der Wickelwelle, so daß nicht nur die Wickelwelle, sondern auch der Wickel deformiert wird. Die Wickelwelle ist im Bereich ihrer beiden Enden von je einem aus zwei Stützen gebildeten Stützenpaar abgestützt. Beide Stützen des Stützenpaares können als Lager ausgebildet sein. Die beiden Lager einer Seite sind über einen Rahmen aneinander abgestützt, in welchen eine Kompensationseinrichtung in Form eines Arbeitszylinders eingeschaltet ist. Der Rahmen ist damit in sich beweglich ausgeführt. Der Arbeitszylinder greift an einem der beiden Lager an und leitet in die Stütze, an der er angreift, eine Steuerungskraft ein, wobei sich am anderen Lager eine entsprechende Reaktionskraft einstellt. Beide Kräfte erzeugen ein Gegenbiegemoment, welches der Durchbiegung der Wickelwelle entgegengerichtet ist. Für die Einregelung der von dem Arbeitszylinder auf die Wickelwelle auszuübenden Steuerungskraft ist eine Regeleinrichtung mit Rechnereinheit, Steuerleitung und Steuerglied vorgesehen, so daß insgesamt eine Kompensationseinrichtung geschaffen ist. Diese Kompensationseinrichtung besitzt einen relativ komplizierten Aufbau und erfordert eine Bereitstellung einer gesonderten Kraftquelle, die über den Arbeitszylinder zur Einwirkung gebracht wird. Je nach der Ausbildung der Regel- und Steuereinrichtung und deren Betrieb kann die durch die zusätzliche Last des Wickels und/oder durch eine Belastungskraft auf die Wickelwelle ausgeübte Biegebeanspruchung durch eine an den Wellenenden angreifende Gegenbiegekraft zumindest teilweise kompensiert werden.

Um den Nachteilen der Durchbiegung von Wellen entgegenzuwirken, ist es ferner bekannt, die Walzen zu bombieren. Die Walzen werden ballig ausgeführt, wobei der Durchmesser der Walzen zur Walzenmitte hin um den doppelten Betrag größer gewählt wird, als es der Durchbiegung der Walze im Betrieb entspricht. Diese Maßnahme ist zwar wirkungsvoll, setzt aber andererseits voraus, daß die Walzen nur in einem vergleichsweise engen Arbeitsbereich betrieben werden, in denen sich weder die Anpreßkräfte noch die Materialeigenschaften des zu bearbeitenden Materials wesentlich ändern. Wenn dagegen unterschiedlichen Arbeitsbedingungen Rechnung getragen werden muß, ist es auch bekannt, für jeden Arbeitsbereich gesondert bombierte Walzen herzustellen und diese dann auszutauschen. Das Verfahren ist recht kostspielig, und zwar einerseits wegen der schwierigen Herstellung genauer Bombierungen und andererseits wegen der erforderlichen Umrüstzeiten.

In der Zeitschrift fluid, Juni 1978, S. 31-37, "Hydrostatische Lagerung in Papiermaschinen", Volz/Vötsch sind hydrostatische Lager gezeigt und beschrieben, die in Achsrichtung der Welle versetzt abständig zueinander angeordnet sind. Es sind also hier hydraulische Einzelstützen gezeigt und beschrieben, die auch einzeln entsprechend beaufschlagt werden, um abschnittweise Gegenkräfte aufzubringen, die der Durchbiegung von schweren Walzen, insbesondere an Papiermaschinen, entgegenwirken. Der apparative und steuerungstechnische Aufwand einer solchen hydrostatischen Lagerung mit einer Vielzahl von Abstützstellen ist ganz erheblich.

Der Erfindung liegt die Aufgabe zugrunde, ein Verfahren zum Verändern der Durchbiegung einer Welle, Achse oder eines anderen Trägers bereitzustellen, also die Möglichkeit einer Gegensteuerung aufzuzeigen, mit der der Durchbiegung der Welle, Achse oder des anderen Trägers entgegengewirkt wird, ohne daß eine komplizierte Steuereinrichtung erforderlich ist. Es soll auch eine zur Durchführung des Verfahrens geeignete Vorrichtung aufgezeigt werden, die vorteilhaft einfach aufgebaut ist und insoweit kostengünstig für die verschiedensten Anwendungsfälle eingesetzt werden kann.

Erfindungsgemäß wird dies bei einem Verfahren der eingangs beschriebenen Art dadurch erreicht, daß die aus dem Gewicht des Trägers und ggfs. den zusätzlichen Lasten und/oder den Belastungskräften abgeleitete Gegenbiegekraft direkt in die Stützen eingeleitet wird.

Die Erfindung geht von dem Gedanken aus, nicht eine fremderzeugte Steuerungskraft als Gegenbiegekraft einzuleiten, sondern eine Gegenbiegekraft aus dem Gewicht und/oder den Lasten und/oder Belastungskräften abzuleiten, die die Durchbiegung des Trägers hervorrufen und damit ein Gegenbiegemoment auszuüben, welches der Durchbiegung des Trägers entgegengerichtet ist. Als Gegenbiegekraft werden direkt die genannten Kräfte eingesetzt. Die Gegenbiegekraft wird aus der Summe der belastenden Kräfte gebildet, die die Durchbiegung verursachen. Damit wird zugleich der Vorteil erreicht, daß sich mit Änderung der Lasten und/oder Belastungskräfte auch die jeweilige Gegenbiegekraft ändert und gleichsam automatisch anpaßt, so daß eine aufwendige Steuer- und Regeleinrichtung in Fortfall kommt. Die als Gegenbiegekraft eingeleitete Kraft läßt sich auch verändern, um in Ausnahmefällen bewußt die Durchbiegung nur teilweise zu kompensieren oder aber auch zu überkompensieren. Die Gegenbiegekraft ist also direkt bzw. unmittelbar aus der jeweiligen Belastung des Trägers abgeleitet, eine eigene Energiequelle und eigene Kraftübertrager sind nicht erforderlich. Da die Größe der Gegenbiegekraft direkt proportional von den direkt oder indirekt auf den Träger wirkenden Lasten und/oder Belastungskräften abhängt, ist eine Steuerung oder Regelung für die Aufhebung der Durchbiegung des Trägers bei differierenden Lasten und/oder Belastungskräften nicht notwendig. Dies gilt auch bei nicht symmetrischen Lasten und/oder Belastungskräften, also bei unterschiedlich einwirkenden Kräften pro Seite des Trägers.

Es besteht die Möglichkeit, daß die Belastungskraft mit Abstand zu den Stützen jedes Stützenpaares in beide Stützen eingeleitet wird. Durch diese axialen Abstand wird eine Übersetzung vorteilhaft genutzt. Es wird nicht nur eine Belastungskraft aufgebracht, sondern zugleich auch ein Gegenbiegemoment. Aus den relativen Abständen der Kraftangriffsstellen zueinander ergeben sich aus der Belastungskraft die Gegenbiegekräfte.

Die Vorrichtung zur Durchführung des Verfahrens kennzeichnet sich erfindungsgemäß dadurch, daß im Bereich jedes Endes des Trägers je ein starrer Rahmen vorgesehen ist, der je ein Stützenpaar aufnimmt und je eine Angriffsstelle für die Einleitung der Belastungskraft bzw. je eine Angriffsstelle zum Abfangen der sich aus dem Gewicht und ggfs. den zusätzlichen Lasten und/oder den Belastungskräften ergebenden Gegenbiegekraft in die Stützen aufweist. Wesentlicher Bestandteil der Vorrichtung ist ein starrer Rahmen, der auf jeden Fall endseitig im Bereich jedes Endes des Trägers vorgesehen und auf dem Ende des Trägers gelagert ist. Dieser Rahmen ist nicht zusätzlich abgestützt. Er dient zur Einleitung der Belastungskraft oder zum Auffangen der Gegenbiegekraft, die sich aus dem Gewicht des Trägers und ggfs. den zusätzlichen Lasten und/oder den Belastungskräften ergibt. Damit ist zugleich sichergestellt, daß eine automatische Anpassung bei Veränderung der Gegenbiegekraft eintritt.

Die Angriffsstelle für die Einleitung der Belastungskraft ist mit axialem Abstand zu dem Stützenpaar angeordnet. Damit wird die Belastungskraft in ein Gegenbiegemoment umgeformt, welches der Durchbiegung des Trägers entgegengerichtet ist. Für die Auflagerung eines als Welle oder Achse ausgebildeten Trägers ist das Stützenpaar als zwei beabstandet angeordnete Lager ausgebildet. Dies bedeutet, daß beide Lager die Welle oder Achse aufnehmen und andererseits in dem starren Rahmen aufgenommen sind, der ansonsten nur von der Belastungskraft belastet ist.

Der axiale Abstand zwischen den beiden Stützen oder Lagern jedes Stützenpaares kann veränderlich einstellbar sein. Dies ist sinnvoll, um z. B. kleine Belastungskräfte einwirken zu lassen und dennoch über die Übersetzung ein hinreichendes Gegenbiegemoment aufzubringen, welches ausreicht, die Durchbiegung der Welle zu beseitigen. Dabei ist das eine der beiden Stützen oder Lager jedes Stützenpaares als Festlager und das andere als Loslager ausgebildet. Zweckmäßig ist das Loslager zwischen dem Festlager und der Angriffsstelle für die Einleitung der Belastungskraft angeordnet.

Es ist aber auch möglich, daß die Angriffsstelle für die Einleitung der Belastungskraft am Rahmen axial veränderlich einstellbar ist. Damit kann die Größe der Gegenbiegekräfte bzw. des Gegenbiegemoments in einfacher Weise angepaßt werden. Auch die Angriffsstelle für die Einleitung der Belastungskraft am Rahmen kann als Lager ausgebildet sein. Die Ausbildung als Lager hat den Vorteil, daß sich auch die Kraftrichtung der Belastungskraft im Raum verändern kann und auch insoweit eine automatische Anpassung durch Aufbringung des Gegenbiegemomentes erfolgt. Ein solcher Fall tritt beispielsweise dann auf, wenn zwei Walzen aneinandergepreßt werden, deren Achsen horizontal nebeneinander angeordnet sind. Die Kraftrichtung der Belastungskraft im Raum kann sich auch während des Betriebes der Vorrichtung ändern. Auch dabei erfolgt eine automatische Anpassung.

Für die veränderliche Einstellung der Lager können mechanische, elektrische oder fluidbetätigte Mittel vorgesehen sein. Insbesondere hydraulisch oder pneumatisch beaufschlagte Zylinder können als solche Mittel vorgesehen sein. Es handelt sich dabei aber nur um die veränderliche Einstellung der Lager, nicht dagegen um die generelle Aufbringung der Belastungskraft.

Die Erfindung wird anhand bevorzugter Ausführungsbeispiele weiter erläutert und beschrieben. Es zeigen:
- Fig. 1: die grundsätzliche Belastungssituation eines Trägers auf eine starre Unterlage mit Belastungskräften,
- Fig. 2: die Verdeutlichung der Ausgangssituation gemäß Fig. 1, bei der jedoch die Belastungskräfte außerhalb der starren Unterlage angreifen,
- Fig. 3: eine Ausgangssituation, bei der die Belastungskräfte noch weiter außen angreifen,
- Fig. 4: die prinzipielle Vorrichtung in einer ersten Ausführungsform,
- Fig. 5: eine weitere prinzipielle Ausführungsform der Vorrichtung,
- Fig. 6: eine etwas gegenständlichere Ausführungsform,
- Fig. 7: eine weitere Ausführungsform mit einem einstellbaren Lager,
- Fig. 8: die grundsätzliche Ausgangssituation bei Belastung eines Trägers auf zwei Stützen mit einer Streckenlast,
- Fig. 9: die Anwendung der Erfindung auf eine solche Belastungssituation,
- Fig. 10: ein prinzipielles Schaubild, ähnlich Fig. 6,
- Fig. 11: die Darstellung einer konstruktiven Ausgestaltungsmöglichkeit einer Seite einer Welle oder Achse im Bereich der Auflagerung und
- Fig. 12: die doppelte Anwendung der Erfindung für ein Walzenpaar in einem Walzwerk.

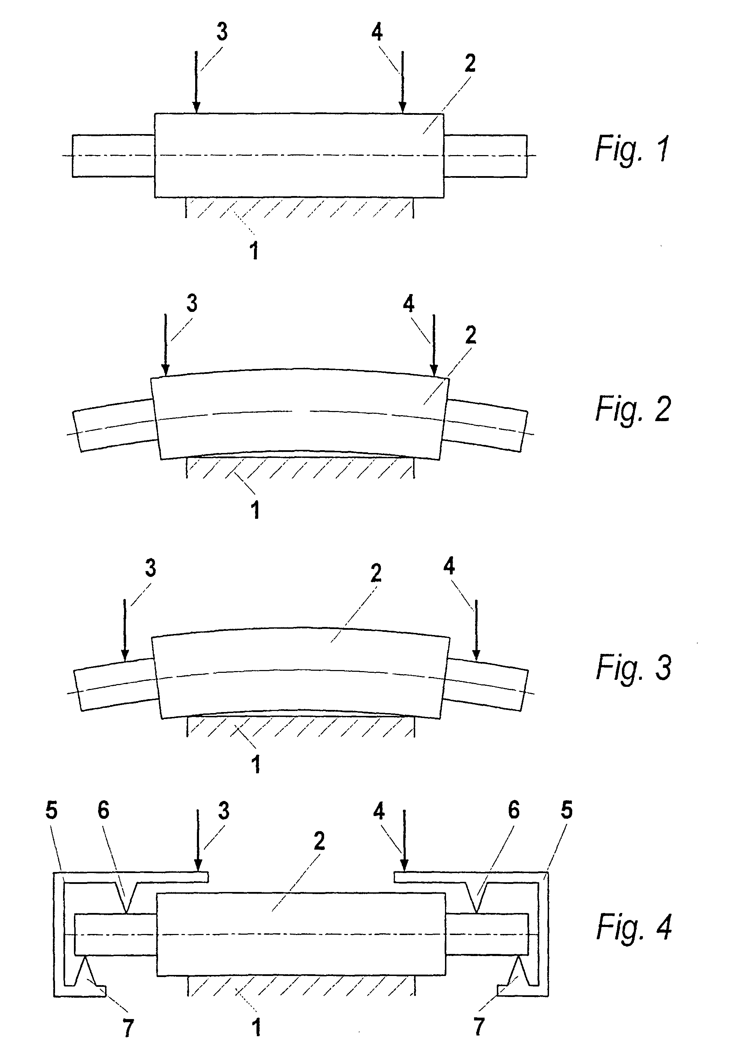

In Fig. 1 ist eine starre Unterlage 1 angedeutet, auf der ein als Walze ausgebildeter Träger 2 mit seinem Eigengewicht aufliegt. Der Träger 2 wird von Belastungskräften 3 und 4 zusätzlich zu seinem Gewicht auf die starre Unterlage 1 gedrückt. Da die Belastungskräfte 3 und 4 innerhalb des durch die starre Unterlage 1 gebildeten Bereiches auf den Träger 2 einwirken, ist der Liniendruck zwischen der starren Unterlage 1 und dem Träger 2 über den gesamten Bereich konstant. In diesem Fall stellt sich das Problem der Durchbiegung des Trägers 2 nicht.

Fig. 2 zeigt eine ähnliche Situation wie Fig. 1, jedoch greifen hier die Belastungskräfte 3 und 4 außerhalb des durch die starre Unterlage 1 gestützten Bereiches des Trägers 2 an. Die Folge davon ist, daß sich der Träger 2 nach oben durchbiegt. Die Durchbiegung nimmt zu, wenn die Belastungskräfte 3 und 4 noch weiter außerhalb der starren Unterlage 1 angreifen, wie dies aus Fig. 3 ersichtlich ist.

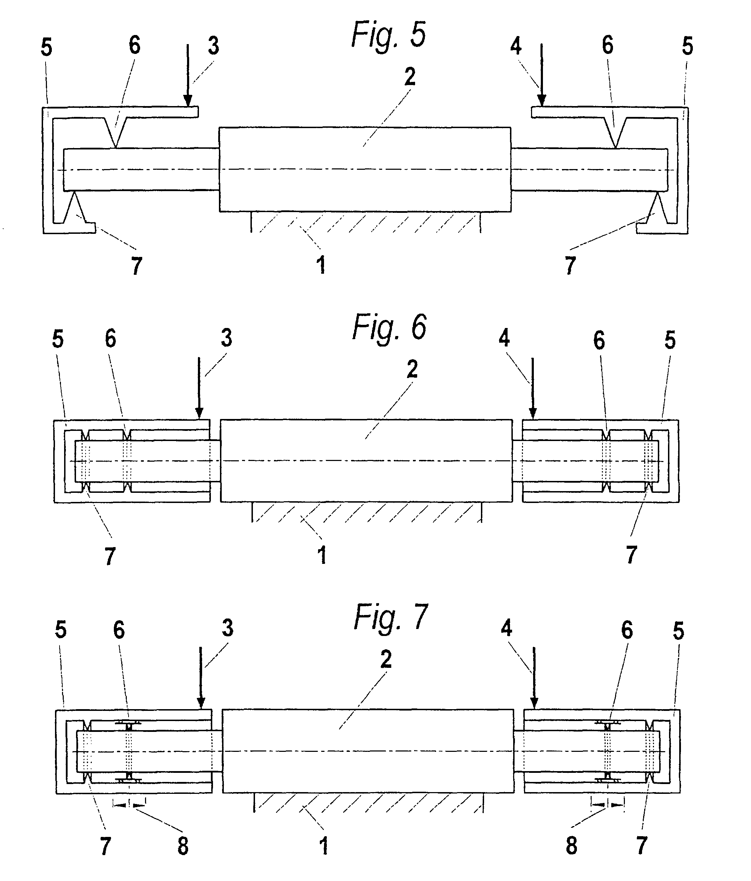

Fig. 4 zeigt die prinzipielle Anwendung und Krafteinwirkung mit dem erfindungsgemäßen Verfahren, und zwar bei einer Einbausituation, wie sie vorher anhand der Fig. 2 und 3 aufgezeigt wurde. Als wesentliches Element ist auf jeder Seite des Trägers 2 ein starrer Rahmen 5 vorgesehen. Jeder starre Rahmen 5 ist auf einer Seite des Trägers 2 an diesem gelagert. Hierzu besitzt er zwei Stützen 6 und 7, die zusammen ein Stützenpaar (auf jeder Seite des Trägers 2) ergeben. Die starren Rahmen 5 sind nur an dem Träger 2 gelagert und daher nicht mehr an anderer Stelle abgestützt. Die Belastungskräfte 3 und 4 werden, wie dargestellt, zur Einwirkung auf die starren Rahmen gebracht, wobei die Belastungskräfte 3 und 4 axial versetzt zu den Stützen 6 und 7 eingeleitet werden. Jede Belastungskraft 3 bzw. 4 ruft an den Stützen 6 und 7 Reaktionskräfte hervor, die ein Gegenbiegemoment erzeugen, welches so gerichtet ist, daß der Durchbiegung der Welle entgegengewirkt wird. Gemäß Fig. 4 wird die Durchbiegung der Welle vollständig kompensiert. Dies gilt auch dann, wenn sich die Größe der Belastungskraft ändert oder die Belastungskraft 3 auf der einen Seite größer oder kleiner als die Belastungskraft 4 auf der anderen Seite ist. Bei einer Änderung der Belastungskräfte 3 und 4 findet gleichsam eine automatische Steuerung statt, so daß jeweils die unerwünschte Durchbiegung des Trägers 2 beseitigt ist. Wie ein Vergleich der Fig. 4 und 5 ergibt, tritt die beabsichtigte Wirkung unabhängig davon ein, ob die Belastungskräfte 3 und 4 innerhalb der starren Unterlage 1 oder außerhalb der starren Unterlage 1 zur Einwirkung auf den jeweiligen Rahmen 5 gebracht werden.

Fig. 6 deutet eine mehr konstruktive Ausführungsvariante an. Der jeweilige starre Rahmen 5 bildet hier gleichsam ein Gehäuse, welches auf jeder Seite das Ende des Trägers 2 in Wellenform umschließt. Die Stützen 6 und 7 sind als Lager ausgebildet und können daher in jeder beliebigen Richtung senkrecht zu der Achse des Trägers 2 Kräfte zur Einwirkung bringen, so daß auch die Zusatzkräfte 3 und 4 in unterschiedlichen Wirkrichtungen angreifen können. Die Wirkrichtlinien der Belastungskräfte 3 und 4 hängen von dem jeweiligen Anwendungsfall ab.

Fig. 7 zeigt die Weiterbildung der Vorrichtung gemäß Fig. 6. Die Stütze 6 kann hier in Richtung des Doppelpfeils 8, also in Richtung der Achse des Trägers 2 verstellt werden, wodurch sich der axiale Abstand zwischen den Stützen 6 und 7 und zu der Angriffsstelle der Einleitung der Belastungskräfte 3 bzw. 4 ändert. Dies ändert die Aufteilung der jeweiligen Belastungskraft 3 oder 4 in ihrer Größe auf die jeweiligen Stützen 6 und 7; ihre Gesamtwirkung, nämlich der lineare oder nicht lineare Liniendruck auf die Unterlage 1, bleibt erhalten. Für die Veränderung der Durchbiegung des Trägers sind also keine zusätzlich aufzubringenden Kräfte erforderlich.

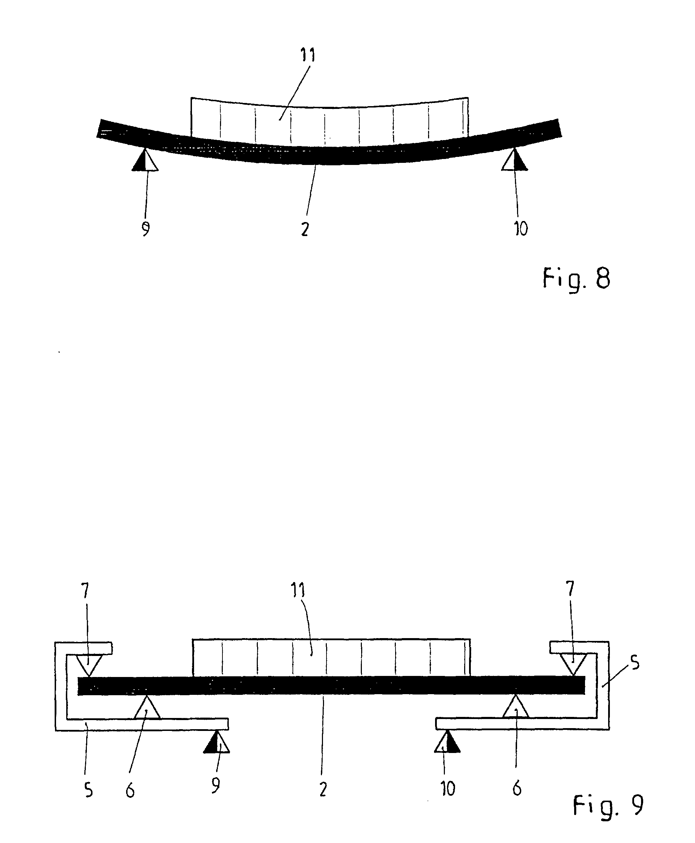

Fig. 8 zeigt einen nicht-rotierend ausgebildeten Träger 2 auf zwei Stützen 9 und 10. Der Träger 2 ist mit einer Streckenlast 11 beaufschlagt, so daß er ohne Anwendung der Erfindung eine Durchbiegung zeigt, wie dies aus Fig. 8 erkennbar ist.

Fig. 9 zeigt die Anwendung der Erfindung auf einen solchen nicht-rotierend ausgebildeten Träger 2 mit Streckenlast 11. Auch hier sind wieder die beiden festen Rahmen 5 auf jeder Seite des Trägers 2 vorgesehen. Jeder starre Rahmen 5 ist mit zwei Stützen 6 und 7 versehen, die an dem Träger 2 endseitig angreifen. Jeder Rahmen 5 wird auf der Stütze 9 bzw. 10 aufgelagert, so daß die Auflagerkräfte aus den Belastungskräften im Bereich dieser Stützen 9 bzw. 10 auf die Rahmen übertragen werden. Diese Auflagerkräfte als Belastungskräfte ergeben sich unmittelbar aus dem Gewicht des Trägers 2 und der Streckenlast 11.

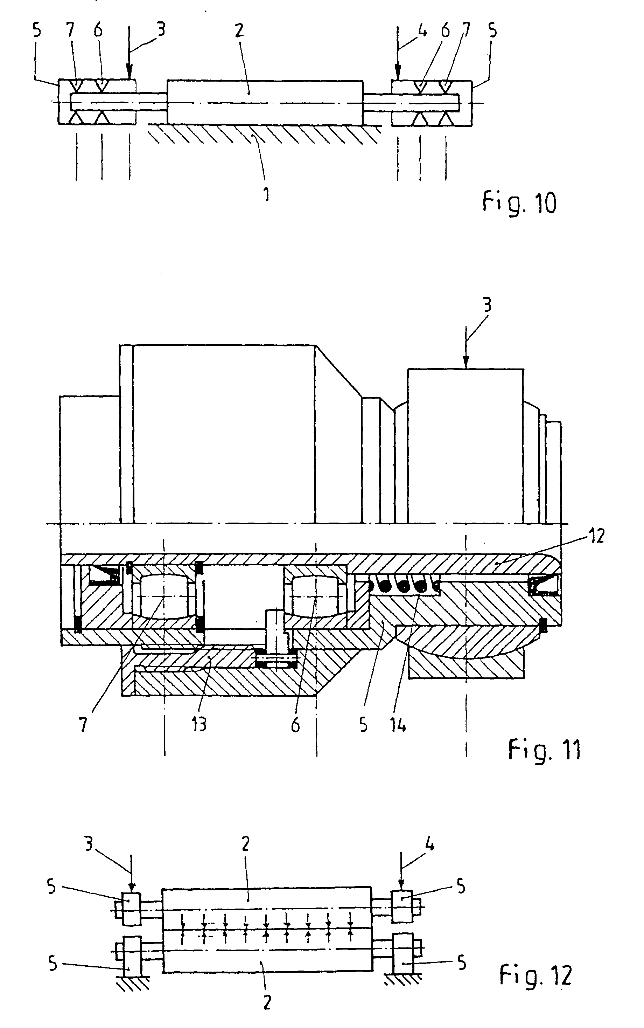

Fig. 10 zeigt nochmals eine prinzipielle Verdeutlichung der Vorrichtung gemäß Fig. 6. Es ist erkennbar, daß die Belastungskräfte 3 und 4 axial beabstandet zu den Stützen 6 und 7 am Rahmen 5 zur Einwirkung gebracht werden.

Fig. 11 zeigt eine konstruktive Ausführung des linken Endes der Vorrichtung gemäß den Fig. 6 und 10. Die Belastungskraft 3 wird an der ersichtlichen Stelle in den starren Rahmen 5 eingebracht. Die Stütze 6 ist als verschiebbares Loslager ausgebildet, während die Stütze 7 als Festlager fungiert. Der Rahmen 5 ist mit einer Hülse 12 versehen, die der Einfachheit halber auf das stummelartige Ende (nicht dargestellt) eines wellenartig ausgebildeten Trägers 2 aufschiebbar ist. Die Lager gemäß der Stützen 6 und 7 sind als Pendelrollenlager ausgebildet. Über einen Stellring 13 gegen die Kraft einer Feder 14 ist es möglich, die axiale Lage der Stütze 6 relativ zu der Stütze 7 und dem Angriffspunkt der Einleitung der Belastungskraft 3 zu verändern. Die Stützen 6 und 7 können als Lager in der gezeigten Weise abgedichtet werden.

Fig. 12 verdeutlicht noch einmal prinzipiell die doppelte Anwendung der Erfindung bei zwei gegeneinander angestellten und als Walzen ausgebildeten Trägern 2. In jedem Endbereich jedes Trägers 2 sind Lagerelemente, wie sie in Fig. 11 dargestellt sind, aufgeschoben. Die Gesamtanordnung ist am Erdboden abgestützt, wie ersichtlich. Über die oberen Lagerelemente werden die Belastungskräfte 3 und 4 zur Einwirkung gebracht. Als Gegenkräfte wirken gleich große Kräfte auf den unteren Träger 2 ein. Damit wird erreicht, daß die Durchbiegung beider Träger 2 beseitigt ist.

### BEZUGSZEICHENLISTE

- 1 -: Unterlage
- 2 -: Träger
- 3 -: Belastungskraft
- 4 -: Belastungskraft
- 5 -: Rahmen
- 6 -: Stütze
- 7 -: Stütze
- 8 -: Doppelpfeil
- 9 -: Stütze
- 10 -: Stütze
- 11 -: Streckenlast
- 12 -: Hülse
- 13 -: Stellring
- 14 -: Feder

## Patentansprüche

1. Verfahren zum Verändern der Durchbiegung eines Trägers, beispielsweise einer Welle oder Achse, der im Bereich seiner beiden Enden von je einem aus zwei Stützen gebildeten Stützenpaar abgestützt wird, wobei der Träger infolge seines Gewichtes und ggfs. durch das Aufbringen zusätzlicher Lasten und/oder durch das Aufbringen von Belastungskräften in die Stützen eine Durchbiegung erfährt und in die Stützen eine der Durchbiegung entgegenwirkende Gegenbiegekraft eingeleitet wird, **dadurch gekennzeichnet, daß** die aus dem Gewicht des Trägers und ggfs. den zusätzlichen Lasten und/oder den Belastungskräften abgeleitete Gegenbiegekraft durch einen starren Rahmen, der je ein Stützenpaar aufnimmt, direkt in die Stützen eingeleitet wird.

2. Verfahren nach Anspruch 1, **dadurch gekennzeichnet, daß** die Belastungskraft mit Abstand zu den Stützen jedes Stützenpaares in beide Stützen eingeleitet wird.

3. Vorrichtung zur Durchführung des Verfahrens nach Anspruch 1 oder 2, mit einem Träger (2), der im Bereich seiner beiden Enden auf je einem stützenpaar (6, 7) abgestützt ist, **dadurch gekennzeichnet, daß** im Bereich jedes Endes des Trägers (2) je ein starrer Rahmen (5) vorgesehen ist, der je ein Stützenpaar (6, 7) aufnimmt und je eine Angriffsstelle für die Einleitung der Belastungskraft (3 bzw. 4) bzw. je eine Angriffsstelle zum Abfangen der sich aus dem Gewicht und ggfs. den zusätzlichen Lasten und/oder den Belastungskräften (3 bzw. 4) ergebenden Gegenbiegekraft in die Stützen (9, 10) aufweist.

4. Vorrichtung nach Anspruch 3, **dadurch gekennzeichnet, daß** die Angriffsstelle für die Einleitung der Belastungekraft (3 bzw. 4) mit axialem Abstand zu dem Stützenpaar (6, 7) angeordnet ist

5. Vorrichtung nach Anspruch 3 oder 4, **dadurch gekennzeichnet, daß** für die Auflagerung eines als Welle oder Achse ausgebildeten Trägers (2) das Stützenpaar (6, 7) als zwei beabstandet angeordnete Lager ausgebildet ist.

6. Vorrichtung nach einem der Ansprüche 3 bis 5, **dadurch gekennzeichnet, daß** der axiale Abstand zwischen den beiden Stützen (6, 7) oder Lagern jedes Stützenpaares veränderlich einstellbar ist.

7. Vorrichtung nach Anspruch 6, **dadurch gekennzeichnet, daß** eine der beiden Stützen (6, 7) oder Lager jedes Stützenpaares als Festlager und das andere als Loslager ausgebildet ist.

8. Vorrichtung nach Anspruch 3, **dadurch gekennzeichnet, daß** die Angriffsstelle für die Einleitung der Belastungskraft (3 bzw. 4) am Rahmen (5) axial veränderlich einstellbar ist.

9. Vorrichtung nach Anspruch 3 oder 8, **dadurch gekennzeichnet, daß** auch die Angriffsstelle für die Einleitung der Belastungskraft (3 bzw. 4) am Rahmen (5) als Lager ausgebildet ist.

10. Vorrichtung nach einem der Ansprüche 6 oder 8, **dadurch gekennzeichnet, daß** für die veränderliche Einstellung der Lager mechanische, elektrische oder fluidbetätigte Mittel vorgesehen sind.

## Claims

1. A method for correcting the bending of a carrier, for example a shaft or an axle, the carrier in the region of each of its two ends being supported by a pair of supporting elements, each pair of supporting elements being formed by two supporting elements, the carrier being bent due to its weight and possibly due to additional loads and/or loading forces being applied into the supporting elements, and a counter bending force counteracting the bending being introduced into the supporting elements, **characterised in that** the counter bending force being derived from the weight of the carrier and possibly the additional loads and/or the loading forces are directly introduced into the supporting elements by a rigid frame each supporting a pair of supporting elements.

2. The method of claim 1, **characterised in that** the loading force is introduced into both supporting elements with a distance to the supporting elements of each pair of supporting elements.

3. An apparatus for conducting the method of claim 1 or 2, including a carrier (2), the carrier (2) in the region of each of its two ends being supported by a pair of supporting elements (6, 7), **characterised in that** a rigid frame (5) is arranged in the region of each end of the carrier (2), each of the rigid frames (5) including a pair of supporting elements (6, 7) and a place of application for the introduction of the loading forces (3 and 4, respectively) and, respectively, a place of application to bear up the counter bending force resulting from the weight and possibly the additional loads and/or the loading forces (3 and 4, respectively) into the supporting elements (9, 10).

4. The apparatus of claim 3, **characterised in that** the place of application for the introduction of the loading forces (3 and 4, respectively) is axially spaced apart from the pair of supporting elements (6, 7).

5. The apparatus of claim 3 or 4, **characterised in that** the pair of supporting elements (6, 7) for supporting a carrier (2) being designed as a shaft or an axle is designed as two spaced apart bearings.

6. The apparatus of at least one of claims 3 to 5, **characterised in that** the axial distance between the two supporting elements (6, 7) or bearings of each pair of supporting elements is adjustable.

7. The apparatus of claim 6, **characterised in that** one of the two supporting elements (6, 7) or bearings of each pair of supporting elements is designed as a fixed bearing, and the other is designed as a movable bearing.

8. The apparatus of claim 3, **characterised in that** the place of application for the introduction of the loading force (3 and 4, respectively) on the frame (5) is axially adjustable.

9. The apparatus of claim 3 or 8, **characterised in that** the place of application for the introduction of the loading force (3 and 4, respectively) on the frame (5) is also designed as a bearing.

10. The apparatus of one of claims 6 or 8, **characterised in that** mechanical, electrical or fluid actuated means are provided for the adjustment of the bearings.

## Revendications

1. Procédé pour modifier la flexion d'un organe porteur, par exemple un arbre ou un axe, qui est supporté à proximité de chacune de ses deux extrémités par une paire d'appuis formée de deux appuis, l'organe porteur subissant une flexion sous l'action de son poids et le cas échéant par l'application de charges supplémentaires et/ou l'application de charges dans les appuis, et une force de flexion opposée s'opposant à la flexion étant introduite dans les appuis, **caractérisé en ce que** la force de flexion opposée découlant du poids de l'organe porteur et le cas échéant des charges supplémentaires et/ou des charges est introduite directement dans les appuis par un cadre rigide reprenant chacun une paire d'appuis.

2. Procédé suivant la revendication 1, **caractérisé en ce que** la charge est introduite dans les deux appuis à distance des appuis de chaque paire d'appuis.

3. Dispositif de réalisation du procédé suivant la revendication 1 ou 2, avec un organe porteur (2), qui repose à proximité de chacune de ses deux extrémités sur une paire d'appuis (6, 7), **caractérisé en ce que**, à proximité de chacune des extrémités de l'organe porteur (2), un cadre rigide (5) est prévu, qui accueille une paire d'appuis (6, 7) et offre un point d'attaque pour l'introduction de la charge (3 ou 4) ou un point d'attaque pour reprendre dans les appuis (9, 10) la force de flexion opposée découlant du poids de l'organe porteur et le cas échéant des charges supplémentaires et/ou des charges (3 et 4).

4. Dispositif suivant la revendication 3, **caractérisé en ce que** le point d'attaque pour l'introduction de la charge (3 ou 4) est disposé à distance axiale de la paire d'appuis (6, 7).

5. Dispositif suivant la revendication 3 ou 4, **caractérisé en ce que**, pour l'appui d'un organe porteur (2) formé comme arbre ou axe, la paire d'appuis (6, 7) est formée comme deux paliers disposés à distance l'un de l'autre.

6. Dispositif suivant l'une des revendications 3 à 5, **caractérisé en ce que** la distance axiale entre les deux appuis (6, 7) ou paliers de chaque paire d'appuis est réglable.

7. Dispositif suivant la revendication 6, **caractérisé en ce qu'**un des deux appuis (6, 7) ou paliers de chaque paire d'appuis est conçu comme palier fixe et l'autre comme palier libre.

8. Dispositif suivant la revendication 3, **caractérisé en ce que** le point d'attaque pour l'introduction de la charge (3 ou 4) sur le cadre (5) est réglable axialement.

9. Dispositif suivant la revendication 3 ou 8, **caractérisé en ce que** le point d'attaque pour l'introduction de la charge (3 ou 4) sur le cadre (5) est conçu comme palier.

10. Dispositif suivant l'une des revendications 6 ou 8, **caractérisé en ce que** des moyens mécaniques, électriques ou actionnés par un fluide sont prévus pour le réglage des paliers.
